# EUROPÄISCHE PATENTSCHRIFT

(11) **EP 2 469 142 B1**
(45) Veröffentlichungstag und Bekanntmachung des Hinweises auf die Patenterteilung: **29.07.2015**
(21) Anmeldenummer: 11192545.9
(22) Anmeldetag: 08.12.2011
(51) Int. Cl.: F16L 13/14

(54) **Pressfitting und dessen Verwendung**
Press fitting and its use
Raccord press-fit et son utilisation

(30) Priorität: 22.12.2010 DE 102010055531
(43) Veröffentlichungstag der Anmeldung: 27.06.2012
(73) Patentinhaber: Viega GmbH & Co. KG, 57439 Attendorn (DE)
(72) Erfinder: Rischen, Christian, 59889 Eslohe (DE); Franke, Bernd, 57413 Finnentrop-Schönholthausen (DE); Müller, Andreas, 57258 Freudenberg (DE)
(74) Vertreter: Cohausz & Florack

(56) Entgegenhaltungen:
- EP-A1- 1 081 423
- DE-C1- 10 130 110
- DE-U1- 20 300 918
- US-A1- 2009 173 130

## Beschreibung

Die Erfindung betrifft ein Pressfitting mit einem rohrförmigen Bauteil und mit einem Endabschnitt des rohrförmigen Bauteils, der zum Herstellen einer Verbindung verpressbar ist, wobei das rohrförmige Bauteil aus Kupfer oder einer Kupferlegierung, insbesondere Rotguss, oder aus Stahl besteht, wobei der Endabschnitt eine Öffnung zur Aufnahme eines Rohres aufweist, wobei der Endabschnitt einen ersten Bereich mit einem ringförmigen Wulst zur Aufnahme eines Dichtungsrings aufweist, wobei der Endabschnitt einen auf der der Öffnung zugewandten Seite des Wulstes angeordneten zweiten Bereich und einen auf der der Öffnung abgewandten Seite des Wulstes angeordneten dritten Bereich aufweist und wobei der erste, zweite und dritte Bereich den Einsteckbereich des Rohres definieren. Ein derartiger Pressfitting ist aus der US-A-2009/173130 bekannt.

Derartige Pressfittings sind aus dem Stand der Technik bekannt und werden insbesondere im Rohrinstallationsbereich, beispielsweise bei der Hausinstallation verwendet. Zur Verbindung eines Rohres mit einem solchen Pressfitting wird ein Rohrende des Rohres in die Öffnung des Endabschnitts des Pressfittings eingeführt, bis das Rohrende in den dritten Bereich des rohrförmigen Bauteils reicht. Anschließend kann der Pressfitting mit einem Presswerkzeug, welches üblicherweise zangenförmig mit zwei Pressbacken ausgebildet ist, im ersten und zweiten Bereich, ggf. auch im dritten Bereich mit dem Rohrende verpresst werden. Das Verpressen im zweiten und optional im dritten Bereich führt zu einer sicheren Fixierung des Rohrendes mit dem Fitting. Weiterhin wird ein in dem ringförmigen Wulst vorgesehener Dichtungsring beim Verpressen gegen die Außenoberfläche des Rohrendes gepresst, sodass die Verbindung abgedichtet wird. Auf diese Weise kann also eine langlebige und dichte Verbindung zwischen dem Pressfitting und dem Rohr auf einfache Weise hergestellt werden, ohne dass ein Schweiß- oder Lötvorgang erforderlich ist.

Da Pressfittings dieser Art häufig aus einer Kupferlegierung oder aus Stahl, insbesondere Edelstahl, bestehen, machen die Materialkosten einen großen Anteil der Herstellungskosten der Pressfittings aus.

Der vorliegenden Erfindung liegt daher die Aufgabe zu Grunde, ein Pressfitting zur Verfügung zu stellen, welcher ökonomischer hergestellt werden kann und dennoch eine gute Dichtheit und Langlebigkeit aufweist.

Diese Aufgabe wird bei dem eingangs genannten Pressfitting erfindungsgemäß dadurch gelöst, dass die Gesamtwandstärke des Pressfittings im zweiten Bereich gegenüber der Gesamtwandstärke des rohrförmigen Bauteils im dritten Bereich zumindest abschnittsweise erhöht ist.

Unter der Gesamtwandstärke des Pressfittings wird die gesamte Dicke der Wand verstanden, welche ggf. auch aus mehreren Schichten bestehen kann. Gegenüber dem rohrförmigen Bauteil in Axialrichtung leicht verschiebbare Schichten, wie zum Beispiel das zu verbindende Rohr selbst oder mit dem rohrförmigen Bauteil unverbundene Hülsen, werden bei der Bestimmung der Gesamtwandstärke jedoch nicht berücksichtigt. Die Wandstärke des rohrförmigen Bauteils bezeichnet lediglich die Wandstärke des einteiligen, rohrförmigen Bauteils allein.

Es wurde erkannt, dass mit dem erfindungsgemäßen Pressfitting die zur Herstellung eines Pressfittings erforderliche Materialmenge reduziert werden kann. Eine solche Reduzierung konnte bisher nicht erreicht werden, da das Verpressen mit einem Presswerkzeug eine gewisse Mindestwandstärke des Pressfittings erfordert. Weiterhin wird eine Kompatibilität der Pressfittings mit den auf dem Markt vorhandenen Presswerkzeugen gefordert, so dass die Pressfittings insbesondere festgelegte Außenmaße aufweisen müssen, um vom Markt angenommen zu werden. Die Innenmaße der Pressfittings werden zudem durch die Außenmaße der zu verbindenden Rohre vorgegeben.

Nun hat es sich jedoch herausgestellt, dass die Mindestwandstärke zur Herstellung einer dichten und langlebigen Verpressung lediglich im zweiten Bereich erforderlich ist. Demgegenüber kann das rohrförmige Bauteil im dritten Bereich eine geringere Wandstärke aufweisen, sodass an dieser Stelle Material des rohrförmigen Bauteils eingespart werden kann. Gleichzeitig kann durch die erhöhte Gesamtwandstärke des Pressfittings im zweiten Bereich dennoch eine ausreichende Stabilität der Verpressung und eine Kompatibilität mit den am Markt verfügbaren Presswerkzeugen erreicht werden.

Die Materialeinsparung wird bei den erfindungsgemäßen Pressfittings also insbesondere dadurch erreicht, dass die Gesamtwandstärke des Pressfittings selektiv erhöht ist. Die Wanddicke des rohrförmigen Elements kann demgegenüber zumindest abschnittsweise, insbesondere im dritten Bereich, reduziert sein. Insbesondere kann das rohrförmige Element demnach zumindest abschnittsweise geringere Wandstärken aufweisen als die rohrförmigen Bauteile der Pressfittings aus dem Stand der Technik.

Während des Verpressens des Fittings wird der erste Bereich derart verformt, dass der innerhalb des dort ausgebildeten Wulstes aufgenommene O-Ring das eingeschobene Rohr gegenüber dem Fitting abdichtet. Im zweiten und ggf. im dritten Bereich führt die Verformung während des Verpressens zu einem abschnittweisen Eindrücken des Fittings in das Rohrmaterial. Dadurch wird eine axiale Sicherung des Rohres relativ zum Fitting bewirkt. Regelmäßig führt das Verpressen des zweiten Bereiches und ggf. des dritten Bereiches zu einer Mehrkantform, insbesondere einer Sechskantform. Somit wird durch eine geeignete Kombination der verschiedenen Bereiche des Fittings sowohl eine Dichtfunktion als auch eine Haltefunktion erreicht.

Der Pressfitting kann in beliebiger Weise, beispielsweise als Rohrkupplung, T-Stück oder Bogenelement ausgebildet sein.
Eine besonders große Materialeinsparung wird bei Pressfittings erreicht, welche einen besonders großen dritten Bereich aufweisen, wie es beispielsweise bei Bogenelementen der Fall ist.

Die sichere Verpressbarkeit und die Stabilität des Pressfittings beim Verpressen kann bevorzugt dadurch verbessert werden, dass die Erhöhung der Gesamtwandstärke im zweiten Bereich bis zur Öffnung des Endabschnitts reicht.

Der Pressfitting kann besonders wirtschaftlich aus einem Rohr hergestellt sein, dessen Wandstärke im Wesentlichen der Wandstärke des dritten Bereichs entspricht.

In einer ersten Ausführungsform des Pressfittings ist die Gesamtwandstärke des Pressfittings im zweiten Bereich gegenüber der Wandstärke des rohrförmigen Bauteils im dritten Bereich zumindest abschnittsweise um mindestens 50 %, bevorzugt mindestens 75 %, insbesondere mindestens 100 %, erhöht. Es hat sich herausgestellt, dass die Wandstärke im dritten Bereich weiterhin ausreichend groß ist, um eine stabile und sichere Verpressung des Pressfittings zu gewährleisten. Gleichzeitig führt der dadurch erzielte Unterschied zwischen der Gesamtwandstärke im zweiten Bereich und der Wandstärke im dritten Bereich zu einer weiteren Materialeinsparung.

Besonders hohe Einsparungen bei den Materialkosten werden erfindungsgemäß dadurch erreicht, dass das rohrförmige Bauteil aus Kupfer oder einer Kupferlegierung, insbesondere Rotguss, oder aus Stahl besteht. Kupfer bzw. Kupferlegierungen oder Stähle, d.h. insbesondere Edelstähle, zeichnen sich häufig durch einen hohen Materialpreis aus, der zudem noch großen Preisschwankungen unterliegt. Weiterhin handelt es sich bei diesen Materialien um die bevorzugten Stoffe zur Herstellung von Pressfittings, sodass für derartige Pressfittings eine besonders große Nachfrage besteht und die Pressfittings in großen Stückzahlen produziert werden. Folglich kann durch die Reduzierung des Materialbedarfs bei solchen Pressfittings eine besonders große Einsparung erreicht werden.

Eine weitere Ausführungsform des Pressfittings ergibt sich dadurch, dass das rohrförmige Bauteil aus Kupfer oder einer umformbaren Kupferlegierung oder einer zu zerspanenden Kupferlegierung, insbesondere Rotguss, besteht und dass bei einer Nennweite des Pressfittings zwischen DN 12 und DN 35 die Wandstärke des rohrförmigen Bauteils im dritten Bereich zwischen 0,85 und 1,3 mm und im zweiten Bereich zumindest abschnittsweise zwischen 1,3 und 2,4 mm beträgt bzw. dass bei einer Nennweite des Pressfittings von mehr als DN 35 die Wandstärke des rohrförmigen Bauteils im dritten Bereich zwischen 1,0 und 1,5 und im zweiten Bereich zumindest abschnittsweise zwischen 1,5 und 2,5 mm beträgt.

Eine weitere Ausführungsform des Pressfittings ist dadurch gegeben, dass das rohrförmige Bauteil aus Stahl, insbesondere Edelstahl, besteht und das bei einer Nennweite des Pressfittings zwischen DN 12 und DN 35 die Wandstärke des rohrförmigen Bauteils im dritten Bereich zwischen 0,5 und 1,3 mm, insbesondere zwischen 0,5 und 0,7 mm, und im zweiten Bereich zumindest abschnittsweise zwischen 1,0 und 2,5 mm beträgt bzw. dass bei einer Nennweite des Pressfittings von mehr als DN 35 die Wandstärke des rohrförmigen Bauteils im dritten Bereich zwischen 1,0 und 1,8 mm und im zweiten Bereich zumindest abschnittsweise zwischen 1,5 und 2,5 mm beträgt.

Bei bisherigen Stahlfittings aus dem Stand der Technik wurde bei einer Nennweite zwischen DN 12 und DN 35 eine durchgehende Wandstärke zwischen 1,35 und 1,6 mm bzw. bei einer Nennweite von mehr als DN 35 eine Wandstärke zwischen 1,8 und 2,2 mm für erforderlich gehalten. Durch die Reduzierung der Wandstärke des rohrförmigen Bauteils im dritten Bereich kann eine deutliche Reduzierung der Materialkosten sowie eine gleichwohl gute Stabilität und Verpressbarkeit des Pressfittings erreicht werden.

Unter der Nennweite des Pressfittings wird im Rahmen dieser Anmeldung die Nennweite nach DIN EN 1057 für Kupfer und Kupferlegierungen und DIN EN 10312 für Edelstahl verstanden.

Die Gesamtwandstärke ist im ersten Bereich und ggf. im zweiten Bereich durch eine integrale lokale Verdickung des rohrförmigen Bauteils zumindest abschnittsweise erhöht. Dabei kann nur ein Abschnitt des zweiten Bereichs, der gesamte zweite Bereich oder auch der erste Bereich und der zweite Bereich verdickt ausgeführt sein. Dadurch kann die erhöhte Gesamtwandstärke auf einfache Weise durch das rohrförmige Bauteil selbst bewirkt werden. Weiterhin kann so ein einheitliches Erscheinungsbild des Pressfittings erreicht werden, da auf separate Elemente zur Erhöhung der Gesamtwandstärke verzichtet werden kann.

Unter einer integralen lokalen Verdickung wird verstanden, dass die erhöhte Gesamtwandstärke im zweiten Bereich zumindest teilweise durch das rohrförmige Bauteil selbst bewirkt ist. Dazu kann beispielsweise die Wandstärke des rohrförmigen Bauteils abschnittsweise erhöht sein.

Die integrale lokale Verdickung kann also besonders einfach durch ein Stauchen des rohrförmigen Bauteils erreicht werden, so dass die Wandstärke des rohrförmigen Bauteils lokal erhöht wird.

Die vorliegende Erfindung betrifft unabhängig von dem zuvor beschriebenen Pressfitting auch ein Verfahren zur Herstellung eines Pressfittings, bei dem ein Endabschnitt des rohrförmigen Bauteils endseitig gestaucht wird, so dass die Wandstärke eines dem offenen Ende des Bauteils zugewandten Abschnitts mit vorgegebener Länge gegenüber der Wandstärke des Rohrstückes im Ausgangszustand vergrößert wird, bei dem eine Wulst in das Rohrstück eingeformt wird und bei dem das Rohrstück zumindest entlang eines Endabschnitts aufgeweitet wird, wobei der Endabschnitt einen ersten Bereich mit der Wulst, einen auf der der Öffnung zugewandten Seite des Wulstes angeordneten zweiten Bereich und einen auf der der Öffnung abgewandten Seite des Wulstes angeordneten dritten Bereich aufweist.

Dabei kann das Aufweiten vor oder nach dem Stauchen und insbesondere vor oder nach dem Einbringen der Wulst durchgeführt werden. Die Reihenfolge der einzelnen Bearbeitungsschritte kann daher so gewählt werden, wie es in Abhängigkeit von Material und Dimensionen des Pressfittings am Günstigsten ist.

Alternativ oder zusätzlich zu den bisher beschriebenen Pressfittings kann das rohrförmige Bauteil abschnittsweise zwei- oder mehrlagig übereinander liegen. Dazu kann beispielsweise der Endabschnitt des rohrförmigen Bauteils zumindest teilweise nach außen oder nach innen gebördelt sein, so dass das rohrförmige Bauteil im Bereich der Bördelung zweilagig ausgebildet ist. Anstelle einer Verdickung wird somit eine integrale zweilagige Anordnung geschaffen, die durch ein Umbördeln hergestellt werden kann.

Die Erfindung betrifft unabhängig von dem zuvor beschriebenen Pressfitting mit Bördelung auch ein Verfahren zur Herstellung eines Pressfittings, bei dem ein Endabschnitt des rohrförmigen Bauteils endseitig über eine vorgegebene Länge nach außen gebördelt wird, bei dem das Bauteil entlang eines Endabschnitts aufgeweitet wird und bei dem eine Wulst in das Bauteil eingeformt wird, wobei der Endabschnitt einen ersten Bereich mit der Wulst, einen auf der der Öffnung zugewandten Seite des Wulstes angeordneten zweiten Bereich und einen auf der der Öffnung abgewandten Seite des Wulstes angeordneten dritten Bereich aufweist.

Alternativ dazu betriff die Erfindung ebenfalls in unabhängiger Weise auch ein Verfahren zur Herstellung eines Pressfittings, bei dem ein Bauteil endseitig über eine vorgegebene Länge nach innen gebördelt wird, bei dem das Bauteil entlang eines Endabschnitts aufgeweitet wird und bei dem eine Wulst in das Bauteil eingeformt wird, wobei der Endabschnitt einen ersten Bereich mit der Wulst, einen auf der der Öffnung zugewandten Seite des Wulstes angeordneten zweiten Bereich und einen auf der der Öffnung abgewandten Seite des Wulstes angeordneten dritten Bereich aufweist.

Auch bei den beiden zuletzt beschriebenen Verfahren kann das Aufweiten vor oder nach dem Bördeln und insbesondere vor oder nach dem Einbringen der Wulst durchgeführt werden. Die Reihenfolge der einzelnen Bearbeitungsschritte kann daher auch in diesen Fällen so gewählt werden, wie es in Abhängigkeit von Material und Dimensionen des Pressfittings am Günstigsten ist.

Ein an die Öffnung angrenzender Bereich des rohrförmigen Bauteils wird also aufgeweitet und umgebogen, so dass das rohrförmige Bauteil abschnittsweise zweilagig übereinander liegt, gleichwohl aber integral, also einteilig ausgebildet ist.

Die flexible Verwendbarkeit des Pressfittings wird in einer weiteren Ausführungsform dadurch erhöht, dass die Gesamtwandstärke im zweiten Bereich durch ein separates, ringförmiges Element erhöht ist. Auf diese Weise kann die Dicke und/oder das Material des die erhöhte Gesamtwandstärke bewirkenden ringförmigen Elements je nach Verwendungszweck gewählt werden. Weiterhin ist auf diese Weise eine einfache Herstellung des Fittings möglich, da ein nachträglicher Umformschritt am rohrförmigen Bauteil entfallen kann.

Das ringförmige Element kann insbesondere aus demselben Material wie das rohrförmige Bauteil oder aus einem anderen Material, insbesondere aus einem Kunststoff, Stahl oder einer Aluminiumlegierung, bestehen. Als Kunststoffe kommen beispielsweise Polypropylen (PP), Polyamid (PA) oder Polyoxymethylen (POM), und zwar jeweils mit oder ohne Glasfaserverstärkung in Betracht. Besteht das ringförmige Element aus demselben Material wie das rohrförmige Bauteil, so kann ein gleichmäßiges Erscheinungsbild des Pressfittings gewährleistet werden. Bei der Verwendung eines anderen Materials können die Eigenschaften für den jeweiligen Verwendungszweck optimiert werden, beispielsweise um den Pressvorgang zu vereinfachen. Insbesondere können für das ringförmige Element auch preisgünstigere Materialien bzw. weniger edle Legierungen verwendet werden, sodass die Materialkosten des Pressfittings weiter reduziert werden. Da das ringförmige Element nicht mit den im Pressfitting geführten Medien in Kontakt kommt, kann das Material unabhängig von seiner Korrosionsbeständigkeit und/oder Trinkwassereignung gewählt werden. Zur Verhinderung einer Kontaktkorrosion kann zwischen dem ringförmigen Element und dem rohrförmigen Bauteil eine Zwischenschicht vorgesehen sein, beispielsweise durch eine Beschichtung des rohrförmigen Bauteils und/oder des ringförmigen Elements.

Eine sichere und einfache Verpressung des Pressfittings wird in einer weiteren Ausführungsform dadurch gewährleistet, dass das ringförmige Element durch eine kraft-, stoff- und/oder formschlüssige Verbindung zumindest in Axialrichtung an dem rohrförmigen Bauteil fixiert ist. Auf diese Weise ist das ringförmige Element gegenüber dem rohrförmigen Bauteil axial nicht verschiebbar, sodass das ringförmige Element beim Verpressen nicht verrutschen bzw. heraus- oder abfallen kann.

Unter der Axialrichtung werden die Richtungen parallel zur Mittelachse des rohrförmigen Bauteils verstanden. Unter einer Fixierung in Axialrichtung wird verstanden, dass das ringförmige Element gegenüber dem rohrförmigen Bauteil in Axialrichtung nicht oder nur mit erheblichem Kraftaufwand, insbesondere nicht per Hand, verschoben werden kann. Insbesondere kann die Herstellung des Pressfittings zwar ein Auf- oder Einschieben des ringförmigen Elements in Axialrichtung umfassen. Bei der Montage des Fittings, d.h. beispielsweise an der Baustelle, ist eine Verschiebung des ringförmigen Elements in Axialrichtung durch den Installateur bevorzugt nicht mehr möglich.

In einer weiteren Ausführungsform des Pressfittings ist das ringförmige Element außerhalb des rohrförmigen Bauteils angeordnet. Auf diese Weise ist eine besonders einfache Herstellung des Pressfittings möglich, da die Erhöhung der Gesamtwandstärke lediglich durch ein Aufsetzen eines äußeren ringförmigen Elements erreicht wird. Weiterhin kann mit dieser Ausführungsform eine Reduzierung der zur Verpressung erforderlichen Presskraft um ca. 30 % erreicht werden, bevorzugt durch eine geeignete Wahl des Materials des ringförmigen Elements. Das ringförmige Element kann insbesondere als geschlossener Ring oder als geschlitzter C-Ring ausgebildet werden. Das rohrförmige Bauteil weist im zweiten Bereich bevorzugt einen Innendurchmesser auf, der im Wesentlichen dem Außendurchmesser des einzuführenden Rohres entspricht.

Eine weitere Ausführungsform des Pressfittings ist dadurch gekennzeichnet, dass das rohrförmige Bauteil im zweiten Bereich eine Aufweitung zur Aufnahme des ringförmigen Elementes aufweist und dass das ringförmige Element innerhalb des rohrförmigen Bauteils angeordnet ist. Auf diese Weise kommt das ringförmige Element beim Verpressen nicht mit dem Presswerkzeug in Kontakt, sodass es durch die bei der Verpressung auftretenden Presskräfte nicht vom Pressfitting gelöst werden kann. Weiterhin kann so ein einheitliches Erscheinungsbild des Pressfittings erreicht werden. Bevorzugt entspricht der Innendurchmesser des ringförmigen Elementes im Wesentlichen dem Innendurchmesser des Pressfittings im dritten Bereich. Weiterhin kann das ringförmige Element insbesondere zur Verbesserung der Verpressung zwischen Pressfitting und Rohr ausgestaltet sein.

Das ringförmige Element kann auch als Halteelement ausgebildet sein, welches beispielsweise durch Erhebungen, Vorsprünge und/oder Schneiden eine Sicherung des in der Pressfitting eingeführten Rohres sicherstellt. Bevorzugt weist das ringförmige Element eine durchgängige Außenfläche auf, sodass es über den gesamten Umfang und im Wesentlichen über seine gesamte Breite an der Innenseite des rohrförmigen Bauteils anliegt. Auf diese Weise wird eine durchgehende Erhöhung der Gesamtwandstärke im zweiten Bereich bewirkt. An der der Innenoberfläche des rohrförmigen Bauteils zugewandten Seite können weiterhin Fixiermittel, beispielsweise Vorsprünge oder Schneiden, vorgesehen sein, sodass eine sichere Fixierung des ringförmigen Elements im rohrförmigen Bauteil, insbesondere in Axialrichtung, sicher gestellt ist. Bevorzugt kann das ringförmige Element bis zur Öffnung des Endabschnitts reichen. Weiterhin bevorzugt kann das ringförmige Element im Wesentlichen über den gesamten Umfang eine konstante Dicke aufweisen. Lokale Schwachstellen der Verbindung auf dem Umfang des ringförmigen Elements können beim Verpressen so vermieden werden.

Eine zusätzliche Materialeinsparung kann weiterhin dadurch erreicht werden, dass die Gesamtwandstärke des Pressfittings im zweiten Bereich gegenüber der Gesamtwandstärke im dritten Bereich erhöht ist.

In einer weiteren Ausführungsform des Pressfittings stimmen die Außendurchmesser des Pressfittings im zweiten und dritten Bereich im Wesentlichen überein. Dadurch kann das Presswerkzeug gleichmäßig auf den zweiten und dritten Bereich wirken, so dass eine im Wesentlichen symmetrische Verpressung erfolgen kann. Zudem können dadurch auch die aus dem Stand der Technik bekannten und auf dem Markt weit verbreiteten Presswerkzeuge weiter verwendet werden.

Eine zusätzliche Abdichtung der Verbindung zwischen dem Pressfitting und einem Rohr wird in einer weiteren Ausführungsform dadurch erreicht, dass im dritten Bereich innerhalb des rohrförmigen Bauteils ein Hülsenelement aus einem elastischen Material, insbesondere einem elastischen Kunststoff, vorgesehen ist. Weiterhin kann durch das Hülsenelement der Zwischenraum zwischen dem Pressfitting und dem eingeführten Rohr ausgefüllt werden, sodass die Bildung von Ablagerungen oder die Verkeimung des Pressfittings verringert oder sogar verhindert werden kann. Das Hülsenelement kann bevorzugt aus einem für Hygieneverbinder zugelassenen Kunststoff, beispielsweise aus PSU (Polysulfon), PPSU (Polyphenylsulfon), PVDF (Polyvinylidenfluorid) oder PTFE (Polytetrafluorethylen bzw. Teflon) bestehen.

In einer weiteren Ausführungsform des Pressfittings weist das Hülsenelement auf der der Öffnung abgewandten Seite eine Verdickung, optional mit einer Anschlagsfläche für ein einzuführendes Rohr, auf. Durch die Verdickung des Hülsenelementes kann die Querschnittserweiterung des Innenkanals beim Übergang vom Rohr zum Pressfitting strömungstechnisch optimiert werden. Dadurch können die Bildung von Wirbeln und der damit verbundene Druckverlust vermindert werden. Mit einer optionalen Anschlagsfläche kann die Einführtiefe des mit dem Pressfitting zu verbindenen Rohres festgelegt werden. Weiterhin liegt das Rohr auf diese Weise unmittelbar an der Verdickung des Hülsenelements an, so dass im Pressfitting ein strömungstechnisch optimierter Innenkanal ausgebildet wird.

Eine verbesserte und insbesondere langlebigere Abdichtung des Pressfittings kann in einer weiteren Ausführungsform dadurch erreicht werden, dass die Wandstärke des rohrförmigen Bauteils im Bereich der Wulst geringer ist als die Gesamtwandstärke des Pressfittings im zweiten Bereich. Durch die dadurch bewirkte geringere Wandstärke im ersten Bereich steht in der Wulst ein größerer Raum zur Verfügung, um einen O-Ring mit größerer Schnurstärke verwenden zu können. Durch die größere Auflagefläche eines O-Rings größerer Schnurstärke auf dem Pressfitting bzw. auf dem Rohr kann eine bessere Abdichtung sowie ein verbesserter Korrosionsschutz und/oder Oxidationsschutz bewirkt werden. Der O-Ring besteht dabei bevorzugt aus den für diesen Einsatzzweck bekannten elastomeren Werkstoffen.

In einer weiteren Ausführungsform des Pressfittings ist außerhalb des rohrförmigen Bauteils eine den Wulst überdeckende, ringförmige Wulstabdeckung vorgesehen. Durch die Wulstabdeckung kann eine reduzierte Wandstärke des rohrförmigen Bauteils im ersten Bereich ausgeglichen werden, sodass Presswerkzeuge aus dem Stand der Technik zur Verpressung des Pressfittings verwendet werden können. Weiterhin wird auf diese Weise die Gesamtwandstärke im ersten Bereich erhöht, sodass eine stabilere Verpressung möglich ist. Die Wulstabdeckung kann vollumfänglich oder geschlitzt, insbesondere als C-Ring zum Aufstülpen, ausgebildet sein. Sie kann insbesondere aus Kunststoff, beispielsweise aus Polypropylen oder glasfaserbewehrten Polyacrylat (PA-6) bestehen. Die Wulstabdeckung kann auch integral mit dem ringförmigen Element ausgebildet sein. Die Wulstabdeckung an sich stellt zudem auch eine unabhängige Erfindung dar.

Pressfittings der vorgenannten Art eignen sich nach einer weiteren Lehre der Erfindung insbesondere für Trink- oder Brauchwasserinstallationen sowie für Gas- und Heizungsinstallationen. Es hat sich gezeigt, dass trotz der mit diesen Pressfittings erzielten Materialeinsparung eine langlebige und sichere Verpressung gewährleistet wird, welche insbesondere bei der Unterputz-Hausinstallation erforderlich ist. Bei diesen Pressfittings kann erreicht werden, dass das geführte Medium trotz der Materialeinsparung lediglich mit hochwertigen Materialien in Berührung kommt. Daher sind die Pressfittings insbesondere als Hygieneverbinder, beispielsweise für Trinkwasseranwendungen geeignet.

Weitere Merkmale und Vorteile der Erfindung ergeben sich aus der nachfolgenden Beschreibung verschiedener Ausführungsbeispiele, wobei auf die beigefügte Zeichnung Bezug genommen wird:

In der Zeichnung zeigen
- Fig. 1: ein Pressfitting aus dem Stand der Technik,
- Fig. 2: ein erstes Ausführungsbeispiel eines erfindungsgemäßen Pressfittings,
- Fig. 3: ein zweites Ausführungsbeispiel eines erfindungsgemäßen Pressfittings,
- Fig. 4: ein drittes Ausführungsbeispiel eines erfindungsgemäßen Pressfittings,
- Fig. 5a-b: ein viertes Ausführungsbeispiel eines Pressfittings,
- Fig. 6a-b: ein fünftes Ausführungsbeispiel eines erfindungsgemäßen Pressfittings,
- Fig. 7a-c: ein sechstes Ausführungsbeispiel eines erfindungsgemäßen Pressfittings,
- Fig. 8a-b: ein siebtes Ausführungsbeispiel eines erfindungsgemäßen Pressfittings,
- Fig. 9: ein achtes Ausführungsbeispiel eines erfindungsgemäßen Pressfittings,
- Fig. 10a-c: eine schematische Darstellung von Verfahrensschritten zur Herstellung eines Pressfittings nach Fig. 2,
- Fig. 11a-c: den Pressfitting nach Fig. 2 in den verschiedenen Herstellungsstadien,
- Fig. 12: ein neuntes Ausführungsbeispiel eines erfindungsgemäßen Pressfittings,
- Fig. 13a-c: eine schematische Darstellung von Verfahrensschritten zur Herstellung eines Pressfittings nach Fig. 12,
- Fig. 14a-c: den Pressfitting nach Fig. 12 in den verschiedenen Herstellungsstadien,
- Fig. 15: ein zehntes Ausführungsbeispiel eines erfindungsgemäßen Pressfittings,
- Fig. 16a-c: eine schematische Darstellung von Verfahrensschritten zur Herstellung eines Pressfittings nach Fig. 15,
- Fig. 17a-c: den Pressfitting nach Fig. 15 in den verschiedenen Herstellungsstadien,
- Fig. 18: ein elftes Ausführungsbeispiel eines erfindungsgemäßen Pressfittings,
- Fig. 19a-d: den Pressfitting nach Fig. 18 in den verschiedenen Herstellungsstadien,
- Fig. 20: ein zwölftes Ausführungsbeispiel eines erfindungsgemäßen Pressfittings und
- Fig. 21a-c: den Pressfitting nach Fig. 20 in den verschiedenen Herstellungsstadien.

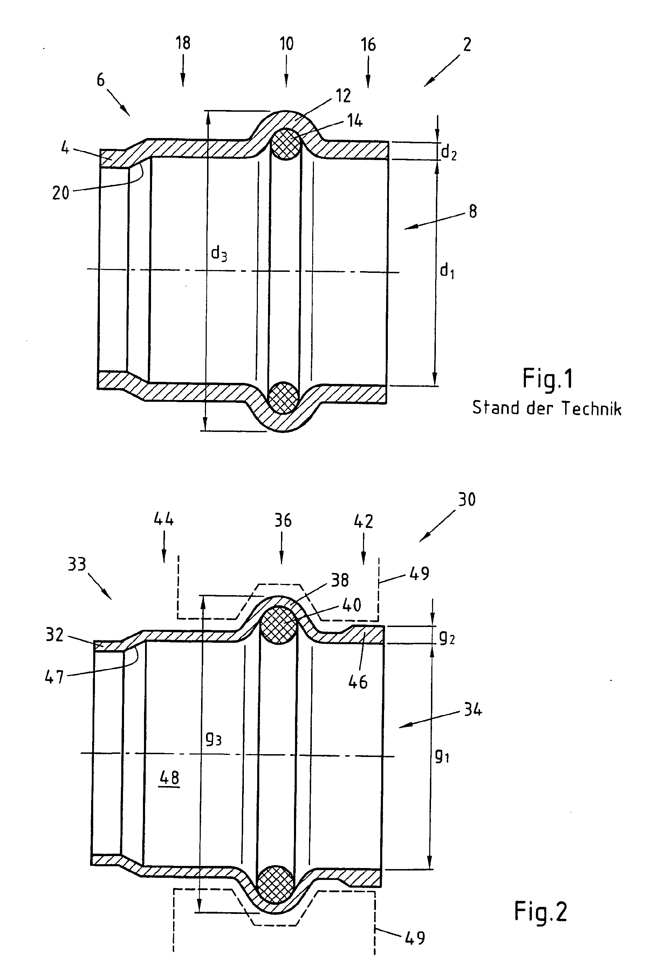

Fig. 1 zeigt ein Pressfitting 2 aus dem Stand der Technik mit einem rohrförmigen Bauteil 4, einem Endabschnitt 6 und einer Öffnung 8 zur Aufnahme eines Rohres (nicht gezeigt) in Schnittdarstellung. Der Endabschnitt 6 weist einen ersten Bereich 10 mit einer ringförmigen Wulst 12 auf, in dem ein als O-Ring ausgebildeter Dichtungsring 14 angeordnet ist. Weiterhin weist der Endabschnitt 6 einen auf der der Öffnung 8 zugewandten Seite des Wulstes 12 angeordneten zweiten Bereich 16 sowie einen auf der der Öffnung 8 abgewandten Seite des Wulstes 12 angeordneten dritten Bereich 18 auf. Der Innendurchmesser d₁ im zweiten Bereich 16 des Pressfittings 2 wird durch den Außendurchmesser des einzuführenden Rohres vorgegeben. Die Wandstärke d₂ des Pressfittings 2 und der Außendurchmesser d₃ im ersten Bereich 10 des Pressfittings 2 sind an die auf dem Markt verfügbaren Presswerkzeuge angepasst. Zum Verbinden eines Rohres mit dem Pressfitting 2 wird ein Rohrende des Rohres in die Öffnung 8, insbesondere bis zu einer vorgesehenen Verjüngung 20, in der Pressfitting 2 eingeschoben. Anschließend kann der Pressfitting 2 mittels eines insbesondere zangenförmigen Presswerkzeugs mit dem Rohr verpresst werden. Durch das Verpressen im zweiten Bereich 16 und optional im dritten Bereich 18 wird das Rohr im Pressfitting fixiert, während der Dichtungsring 14 durch das Verpressen im ersten Bereich 10 die Dichtheit der Verbindung gewährleistet. Die Wandstärke des rohrförmigen Bauteils 4 ist bei dem Pressfitting 2 im Wesentlichen konstant.

Bei den in den nachfolgenden Figuren dargestellten Ausführungsbeispielen sind gleichartige Elemente jeweils mit denselben Bezugszeichen versehen.

Fig. 2 zeigt ein erstes Ausführungsbeispiel eines erfindungsgemäßen Pressfittings in Schnittdarstellung. Der Pressfitting 30 weist ebenfalls ein rohrförmiges Bauteil 32 mit einem Endabschnitt 33 und einer Öffnung 34 zur Aufnahme eines Rohres (nicht gezeigt) auf.

In einem ersten Bereich 36 ist ein Wulst 38 mit einem darin aufgenommenen Dichtungsring 40 angeordnet. Weiterhin weist der Endabschnitt 33 noch einen auf der der Öffnung 34 zugewandten Seite des Wulstes 38 angeordneten zweiten Bereich 42 sowie einen auf der der Öffnung 34 abgewandten Seite des Wulstes 38 angeordneten dritten Bereich 44 auf.

Der Innendurchmesser g₁ im zweiten Bereich 42 des Pressfittings 30 wird durch den Außendurchmesser des einzuführenden Rohres vorgegeben und entspricht bei dem dargestellten Ausführungsbeispiel dem Innendurchmesser d₁ des in Fig. 1 gezeigten Pressfittings 2.

Im zweiten Bereich 42 ist die Gesamtwandstärke des Pressfittings 30 gegenüber der Wandstärke des rohrförmigen Bauteils 32 im dritten Bereich 44 durch eine integrale lokale Verdickung 46 des rohrförmigen Bauteils 32 abschnittsweise erhöht. Bevorzugt ist die Gesamtwandstärke im zweiten Bereich 42 so gewählt, dass ein sicheres Verpressen des Pressfittings 30 möglich ist. Bevorzugt entspricht die Gesamtwandstärke g₂ des Pressfittings 30 im zweiten Bereich 42 zumindest teilweise der Wandstärke d₂ des Pressfittings 2 aus Fig. 1.

Weiterhin bevorzugt entspricht zudem der Außendurchmesser g₃ im ersten Bereich 36 des Pressfittings 30 dem entsprechenden Außendurchmesser d₃ des in Fig. 1 gezeigten Pressfittings. Dadurch ist der Pressfitting 30 mit den auf dem Markt verfügbaren Presswerkzeugen aus dem Stand der Technik kompatibel. Die Presskontur 49 eines solchen Presswerkzeugs ist in Fig. 2 schematisch dargestellt. Demgegenüber ist die Wandstärke des rohrförmigen Bauteils 32 in den übrigen Bereichen reduziert, sodass der Pressfitting 30 gegenüber dem in Fig. 1 dargestellten Pressfitting 2 einen geringeren Materialbedarf erfordert und damit kostengünstiger herstellbar ist. Als Anschlag für ein einzuführendes Rohr kann der Pressfitting 30 noch eine Verjüngung 47 des Innenkanals 48 aufweisen.

Insbesondere ist die Gesamtwandstärke im zweiten Bereich 42 auch gegenüber der Wandstärke des rohrförmigen Bauteils 32 im ersten Bereich 36 erhöht. Dadurch steht bei gleichem Außendurchmesser des Pressfittings 30 im ersten Bereich 36 ein größerer Raum für den Dichtungsring 40 zur Verfügung, so dass ein Dichtungsring 40 mit erhöhter Schnurstärke verwendet werden kann. Dieser verbessert die dauerhafte Dichtheit der Pressverbindung.

Der Pressfitting 30 bzw. das rohrförmige Bauteil 32 kann insbesondere aus einem Rohr hergestellt worden sein, welches eine der Wandstärke des rohrförmigen Bauteils 32 im dritten Bereich 44 im Wesentlichen entsprechende Wandstärke aufwies. Die Verdickung 46 kann beispielsweise durch Stauchen des rohrförmigen Bauteils 32 hergestellt worden sein.

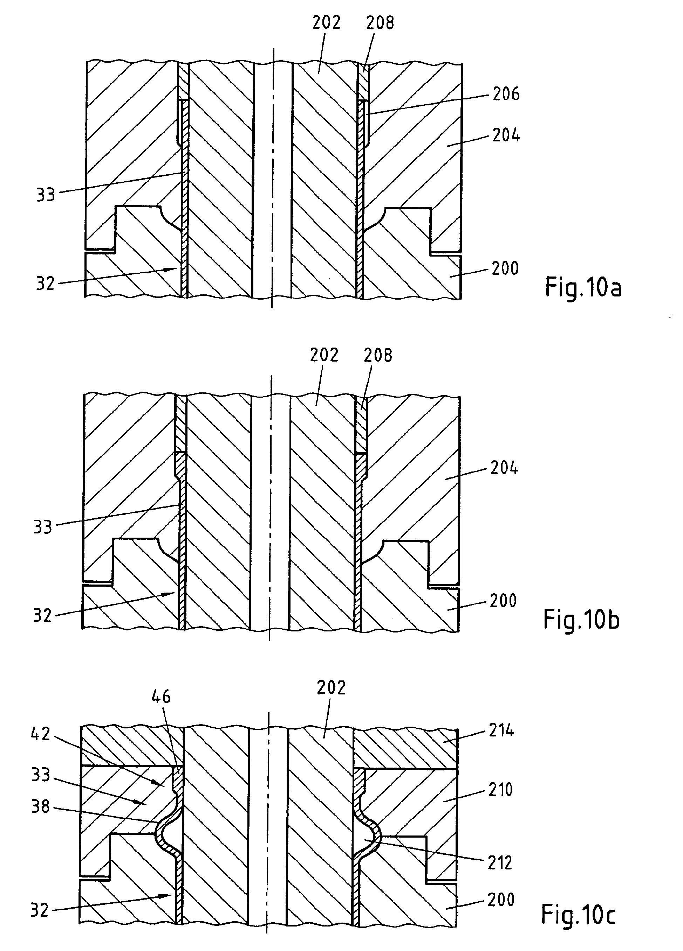

In Fig. 10a bis 10c sind drei verschiedene Situationen während der Herstellung eines Pressfittings nach Fig. 2 dargestellt. Grundsätzlich weist das Verfahren die folgenden Schritte auf.

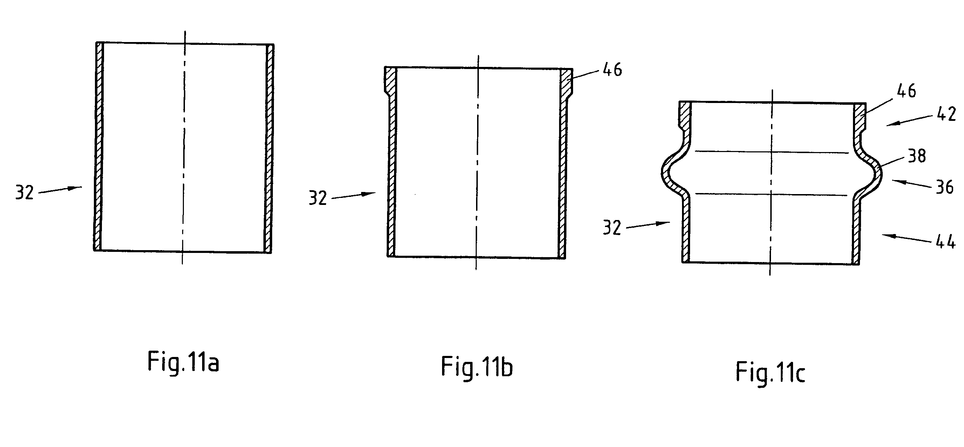

Fig. 10a zeigt den Ausgangszustand der Vorrichtung zur Herstellung des Pressfittings, während Fig. 11a das Bauteil 32 an sich zeigt. Für das Stauchen wird das Bauteil 32 in einer Spannbacke 200 eingespannt, während im Inneren des Bauteils 32 ein Dorn 202 angeordnet ist, um das rohrförmige Bauteil 32 nach außen hin abzustützen. Des Weiteren ist eine Matrize 204 vorgesehen, deren Innenkontur im unteren Bereich an der Außenseite des rohrförmigen Bauteils 32 anliegt und im oberen Abschnitt einen Zwischenraum 206 freilässt. Schließlich ist eine Stauchhülse 208 zwischen dem Dorn 202 und der Matrize 204 angeordnet.

Ausgehend von dieser Position nach Fg. 10a wird die Stauchhülse 208 nach unten gedrückt, wodurch das - in der Fig. 10b obere - Ende des rohrförmigen Bauteils 32 zusammengedrückt, also verformt wird. Die Stauchhülse 208 wird dabei so weit nach unten verfahren, bis der gesamte Zwischenraum 206 vom Material des Bauteils 32 ausgefüllt wird.

Somit wird die Wandstärke des dem offenen Ende des Bauteils 32 zugewandten Abschnitts 42 mit vorgegebener Länge gegenüber der Wandstärke des Bauteils 32 im Ausgangszustand in Form der Verdickung vergrößert. Dieses ist auch in Fig. 11b gezeigt.

Im nächsten Schritt, der in der Fig. 10c dargestellt ist, wird eine Wulst 38 in das Bauteil 32 eingeformt. Dazu wird eine andere Matrize 210 oberhalb der Spannbacke 200 angeordnet, deren Innenkonturen zueinander passen und einen Zwischenraum 212 zwischen sich und dem Bauteil 32 freilassen. Wird nun eine weitere Stauchhülse 214 von oben angesetzt, so wird das rohrförmige Bauteil 32 erneut nach unten gedrückt, so sich die Wulst durch Verformung des Materials des Bauteils 32 ausbildet. Somit ergibt sich die in Fig. 11c dargestellte Form des Bauteils 32.

Ein weiterer Bearbeitungsschritt ist erforderlich, um zu der in Fig. 2 dargestellten Ausbildung zu gelangen. Das rohrförmige Bauteil 32 wird zumindest entlang des Endabschnitts 33 aufgeweitet, um einen Anschlag 47 für das einzusteckende Rohr zu bilden.

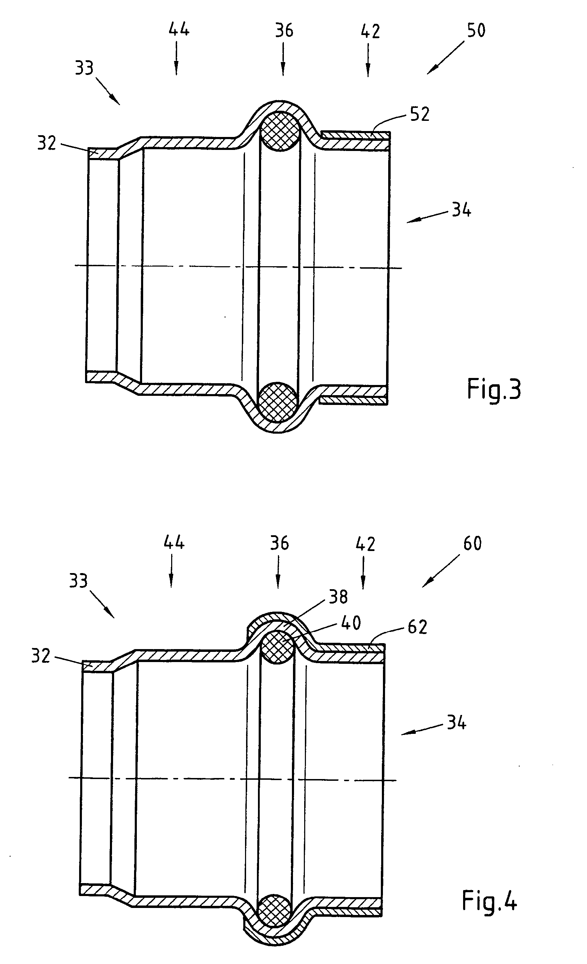

Fig. 3 zeigt ein weiteres Ausführungsbeispiel des Pressfittings in Schnittdarstellung. Der Pressfitting 50 weist im zweiten Bereich 42 ein ringförmiges Element 52 auf, welches außerhalb des rohrförmigen Bauteils 32 angeordnet ist. Auf diese Weise ist die Gesamtwandstärke im zweiten Bereich 42 gegenüber der Wandstärke im dritten Bereich 44 erhöht. Unter der Gesamtwandstärke des Pressfittings 50 wird die gesamte Dicke der zwei aufeinanderliegenden Schichten des rohrförmigen Bauteils 32 und des ringförmigen Elements 52 verstanden. Durch die Erhöhung der Gesamtwandstärke im zweiten Bereich 42 wird wiederum eine sichere Verpressung des Pressfittings 60 mit einem Rohr (nicht gezeigt) gewährleistet. Gleichzeitig kann das rohrförmige Bauteil 32 abschnittsweise eine dünnere Wandstärke aufweisen, sodass die Materialkosten des Pressfittings 50 reduziert werden. Das ringförmige Element 52 kann beispielsweise aus demselben Material bestehen wie das rohrförmige Bauteil 32.

Fig. 4 zeigt ein drittes Ausführungsbeispiel des Pressfittings in Schnittdarstellung. Der Pressfitting 60 unterscheidet sich von dem in Fig. 3 gezeigten Pressfitting 50 dadurch, dass das ringförmige Element 62 sich zumindest teilweise in den ersten Bereich 36 des Endabschnitts 33 erstreckt. Auf diese Weise kann die reduzierte Wanddicke des rohrförmigen Bauteils 32 im ersten Bereich 36 ausgeglichen werden, sodass eine verbesserte Verpressbarkeit des Pressfittings erreicht wird. Weiterhin kann ein Dichtungsring 40 mit einer bei den Pressfittings aus dem Stand der Technik üblichen Schnurstärke verwendet werden. Zudem wird durch die teilweise Bedeckung der Wulst 38 durch das ringförmige Element 62, d.h. durch die Wulstabdeckung, auch ein zusätzlicher Schutz der Wulst 38 vor den bei der Verpressung in diesem Bereich auftretenden, besonders hohen Presskräften bewirkt.

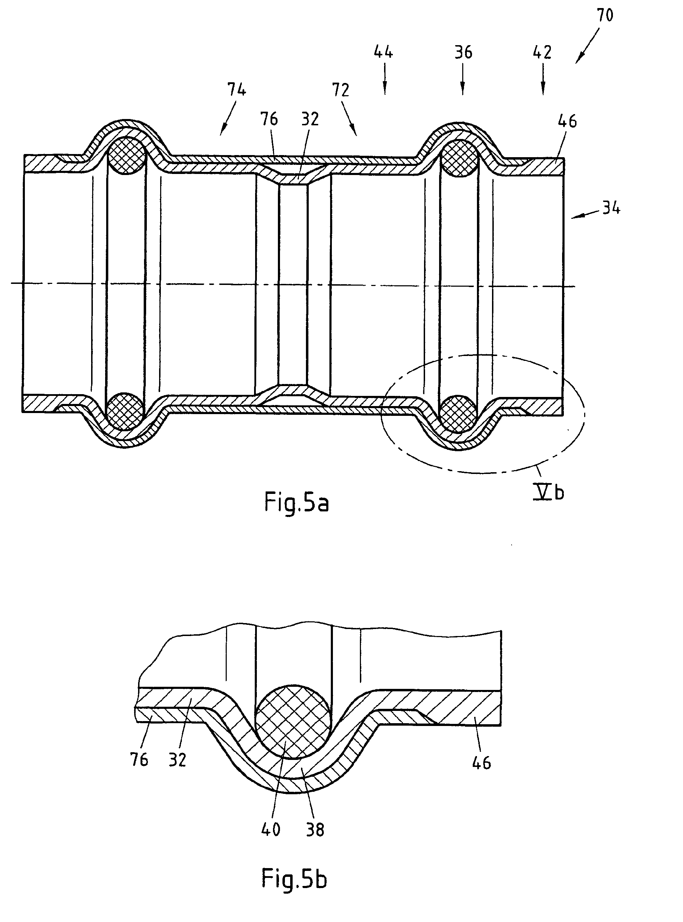

In Fig. 5a ist ein weiteres Ausführungsbeispiel des Pressfittings, der jedoch nicht zur Erfindung gehört, in Schnittdarstellung gezeigt. Fig. 5b zeigt einen vergrößerten Ausschnitt aus Fig. 5a. Der Pressfitting 70 ist als symmetrischer Rohrverbinder mit zwei Endabschnitten 72, 74 ausgebildet, mit dem zwei Rohre miteinander verbunden werden können. Im Folgenden wird lediglich der rechte Endabschnitt 72 beschrieben, da sich die Wirkung des zweiten Endabschnitts entsprechend ergibt. Der Endabschnitt 72 unterscheidet sich von dem Endabschnitt 33 des in Fig. 2 dargestellten Pressfittings 2 dadurch, dass außen um das rohrförmige Bauteil 32 im zweiten Bereich 42 ein separates, ringförmiges Element 76 angeordnet ist, welches sich über den ersten und dritten Bereich bis hin zum Endabschnitt 74 erstreckt. Das ringförmige Element 76 kann beispielsweise aus einem preisgünstigeren Material hergestellt sein als das rohrförmige Bauteil 32. Durch das ringförmige Element 76 weist der Endabschnitt 72 im ersten, zweiten und dritten Bereich im Wesentlichen eine konstante Gesamtdicke auf, sodass ein besonders symmetrisches Verpressen des Pressfittings 70 möglich ist. Weiterhin wird die Verpressbarkeit des Pressfittings 70 mit den aus dem Stand der Technik bekannten bzw. auf dem Markt verfügbaren Presswerkzeugen, die bisher beispielsweise zum Verpressen des in Fig. 1 gezeigten Pressfittings 2 verwendet wurden, verbessert. Gleichzeitig werden die Materialkosten durch das aus einem preisgünstigeren Material bestehende ringförmige Element 76 reduziert.

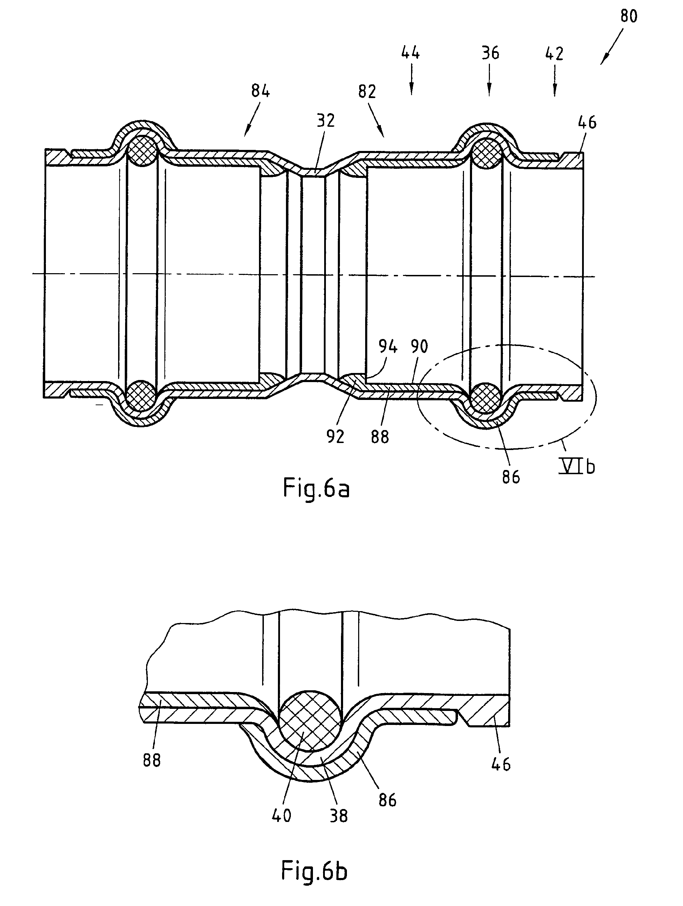

In Fig. 6a ist ein weiteres Ausführungsbeispiel eines Pressfittings in Schnittdarstellung gezeigt. Fig. 6b zeigt einen vergrößerten Ausschnitt aus Fig. 6a. Der Pressfitting 80 ist als symmetrischer Rohrverbinder mit einem ersten Endabschnitt 82 und einem zweiten Endabschnitt 84 ausgebildet. Nachfolgend wird lediglich der rechte Endabschnitt 82 beschrieben. Im zweiten Bereich 42 des Endabschnitts 82 weist das rohrförmige Bauteil 32 eine Verdickung 46 auf. Zudem ist optional ein äußeres, ringförmiges Element 86 vorgesehen, welches die Gesamtwandstärke im zweiten Bereich 42 abschnittsweise erhöht und sich bis in den ersten Bereich 36 erstreckt. Der Außenumfang des rohrförmigen Bauteils 32 ist im dritten Bereich 44 im Wesentlichen an den Außenumfang des Pressfittings 80 im Abschnitt der erhöhten Gesamtwandstärke im zweiten Bereich 42 angepasst. Auf diese Weise kann eine gleichmäßigere und einfachere Verpressung des Pressfittings 80 mit einem Presswerkzeug erreicht werden, da der Pressfitting 80 im Bereich der Wulst 38 im Wesentlichen symmetrisch ausgebildet ist.

Da die Wandstärke des rohrförmigen Bauteils 32 im dritten Bereich 44 gegenüber dem zweiten Bereich reduziert ist, weist das rohrförmige Bauteil 32 im dritten Bereich 44 einen größeren Innendurchmesser auf. Dadurch wird ein Freiraum zur Verfügung gestellt, in dem beispielsweise ein Hülsenelement 88 aus einem elastischen Material, insbesondere einem elastischen Kunststoff, angeordnet werden kann. Das Hülsenelement 88 weist bevorzugt einen zylindrischen Bereich 90 sowie eine Verdickung 92, optional mit einer Anschlagsfläche 94 für ein einzuführendes Rohr auf. Die Wandstärke des zylindrischen Bereichs 90 ist bevorzugt so gewählt, dass der Innendurchmesser des Bereichs 90 dem Innendurchmesser des zweiten Bereichs 42 bzw. im Wesentlichen dem Außendurchmesser des einzuführenden Rohres (nicht gezeigt) entspricht. Durch das Hülsenelement 88 kann das Entstehen eines Zwischenraumes zwischen dem einzuführenden Rohr und dem rohrförmigen Bauteil 32 im dritten Bereich 44 verhindert werden. Dadurch können Ablagerungen und eine Verkeimung der Verbindung zuverlässig verhindert werden, so dass der Pressfitting 80 beispielsweise als Hygieneverbinder, bevorzugt bei der Trinkwasserinstallation, eingesetzt werden kann.

Mit der Anschlagsfläche 94 kann die Einführtiefe des in der Pressfitting einzuführenden Rohres definiert werden. Weiterhin kann die Verdickung 92 eine Angleichung der Innenkontur des einzuführenden Rohres an die Innenkontur des Pressfittings 80 bewirken, so dass das Auftreten von Verwirbelungen und ein damit einhergehender Druckabfall reduziert werden können. Die Anschlagsfläche 94 weist dazu bevorzugt eine Höhe auf, welche der typischen Gesamtwandstärke der einzuführenden Rohre entspricht.

Die Pressfittings 70 und 80 können grundsätzlich auch als asymmetrische Rohrverbinder ausgebildet sein. Auf diese Weise können verschiedenartige Verbindungen oder Rohre mit den Pressfittings verbunden werden. Weiterhin können alle Pressfittings grundsätzlich nicht nur als Rohrverbinder, sondern auch als andere Komponenten zur Rohrinstallation, beispielsweise als T-Stück, Winkelstück oder ähnliches ausgebildet sein.

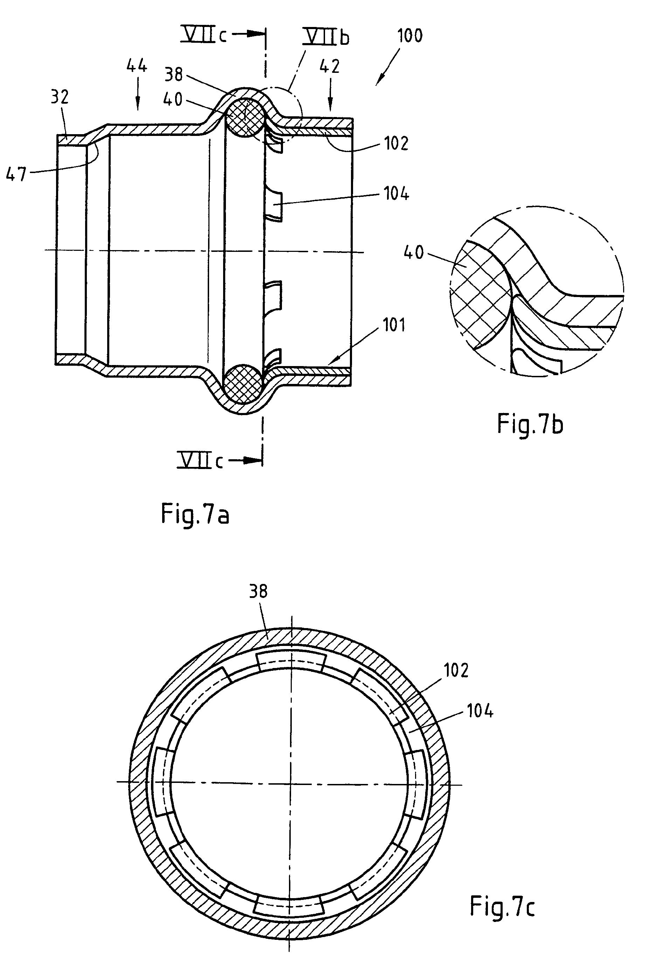

In Fig. 7a ist ein weiteres Ausführungsbeispiel eines Pressfittings in Schnittdarstellung gezeigt. Fig. 7b zeigt einen vergrößerten Ausschnitt aus Fig. 7a. In Fig. 7c ist der Pressfitting aus Fig. 7a im Querschnitt dargestellt. Der Pressfitting 100 weist im zweiten Bereich 42 eine Aufweitung 101 auf, d.h. der Innendurchmesser ist in diesem Bereich gegenüber dem Innendurchmesser im dritten Bereich 44 zumindest teilweise, bevorzugt im Wesentlichen vollständig erhöht. Die Aufweitung 101 dient zur Aufnahme eines innerhalb des rohrförmigen Bauteils angeordneten, ringförmigen Elements 102. Durch das ringförmige Element 102 ist die Gesamtwandstärke des Pressfittings 100 im zweiten Bereich 42 gegenüber der Wandstärke des rohrförmigen Bauteils 32 im dritten Bereich 44 erhöht. Das ringförmige Element 102 ist wie in den Fig. 7a bis 7c dargestellt mit montagetechnischen Schlitzen 104 versehen, die ein Einrasten des Elements 102 innerhalb des Pressfittings ermöglichen.

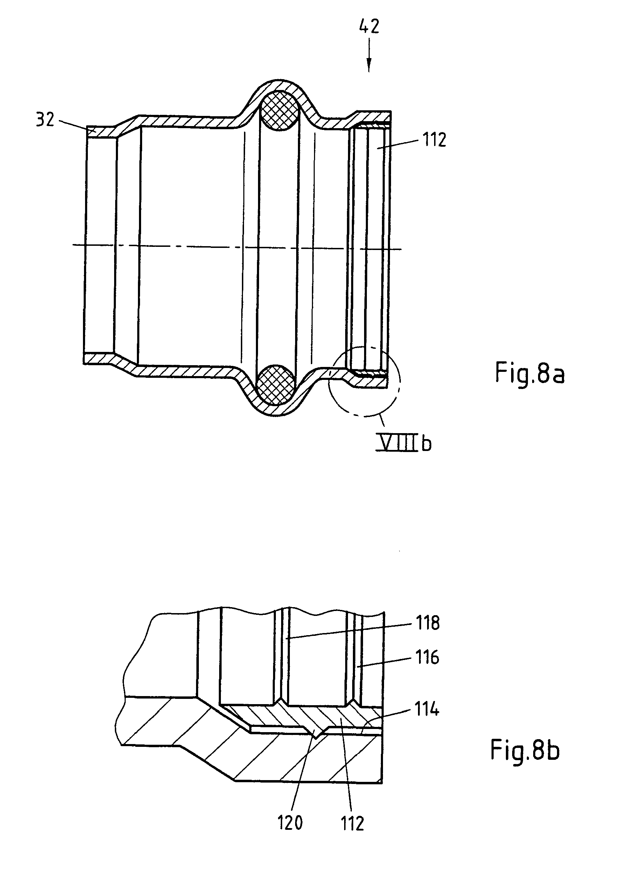

In Fig. 8a ist ein weiteres Ausführungsbeispiel des Pressfittings in Schnittdarstellung gezeigt. Fig. 8b zeigt einen vergrößerten Ausschnitt der Fig. 8a. Bei dem Pressfitting 110 wird die erhöhte Gesamtwandstärke im zweiten Bereich 42 des rohrförmigen Bauteils 32 durch ein innerhalb des rohrförmigen Bauteils 32 angeordnetes ringförmiges Element 112 bewirkt, welches als Halteelement ausgebildet ist. Das rohrförmige Bauteil 32 weist dazu im zweiten Bereich 42 eine Aufweitung 114 auf, welche die Aufnahme des Halteelements 112 ermöglicht. Der Innendurchmesser des Halteelements 112 entspricht im Wesentlichen dem Außendurchmesser des einzuführenden Rohres. Wie in Fig. 8b dargestellt, weist das Halteelement 112 an seiner Innenseite zwei ringförmige Erhebungen 116, 118 auf, welche beim Verpressen des Pressfittings 110 mit einem Rohr eine sichere Fixierung des eingeführten Rohres gewährleisten. Auf der Außenseite des ringförmigen Halteelements 112 ist weiterhin eine ringförmige Erhebung 120 vorgesehen, welche eine kraft-und/oder formschlüssige Verbindung des Halteelements 112 mit dem rohrförmigen Bauteil 32 bewirkt und dadurch eine axiale Verschiebung des Halteelements 112 gegenüber dem Pressfitting 110 verhindert.

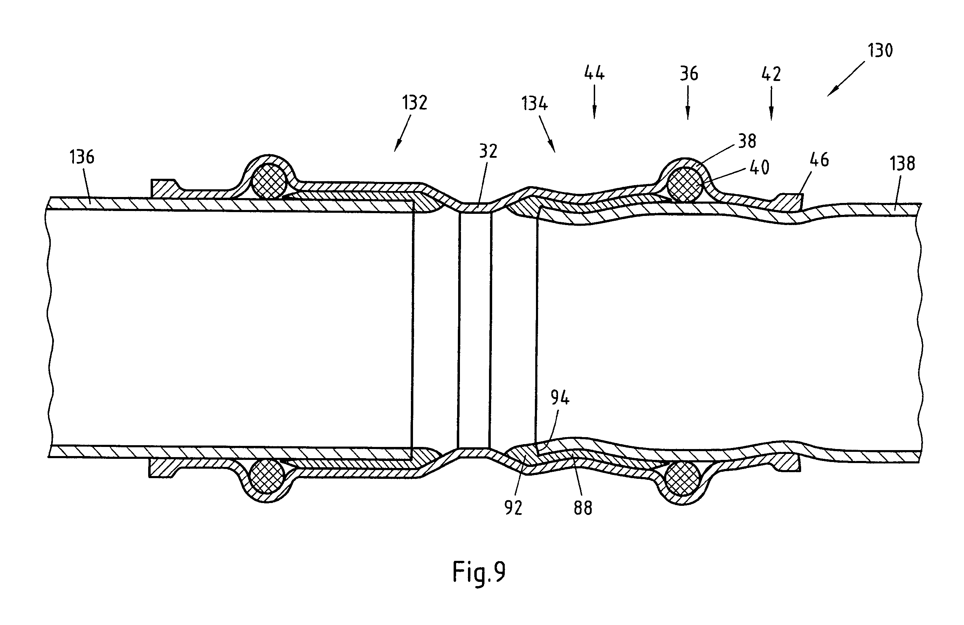

Fig. 9 zeigt ein weiteres Ausführungsbeispiel des Pressfittings. Der Pressfitting 130 ist als Rohrverbinder mit einem ersten Endabschnitt 132 und einem zweiten Endabschnitt 134 ausgebildet und unterscheidet sich von dem in Fig. 6a dargestellten Pressfitting 80 dadurch, dass kein ringförmiges Element 86 vorgesehen ist. In den ersten Endabschnitt 132 ist ein erstes Rohr 136 und in den zweiten Endabschnitt 134 ist ein zweites Rohr 138 eingeführt. Der erste Endabschnitt 132 befindet sich im unverpressten Zustand, während der zweite Endabschnitt 134 bereits mit dem Rohr 138 verpresst wurde. Es ist deutlich zu erkennen, dass der durch die Verdickung 46 erhöhte Abschnitt im zweiten Bereich 42 des zweiten Endabschnitts 134 zu einer starken Fixierung des Rohres 138 geführt hat. Gleichzeitig wird durch das in dem Wulst 86 vorgesehene Dichtelement 40 die Dichtheit der Verbindung gewährleitet. Durch das Hülsenelement 88 ist der Zwischenraum zwischen dem Rohr 138 und dem dritten Bereich 44 des rohrförmigen Bauteil 32 ausgefüllt, so dass sich hier keine Ablagerungen oder eine Verkeimung bilden können. Zudem wird durch die Verdickung 92 des Hülsenelements 88 der Übergang des Innenkanals vom Rohr 138 zum rohrförmigen Bauteil 32 ausgeglichen, so dass eine Wirbelbildung und ein Druckverlust vermindert werden.

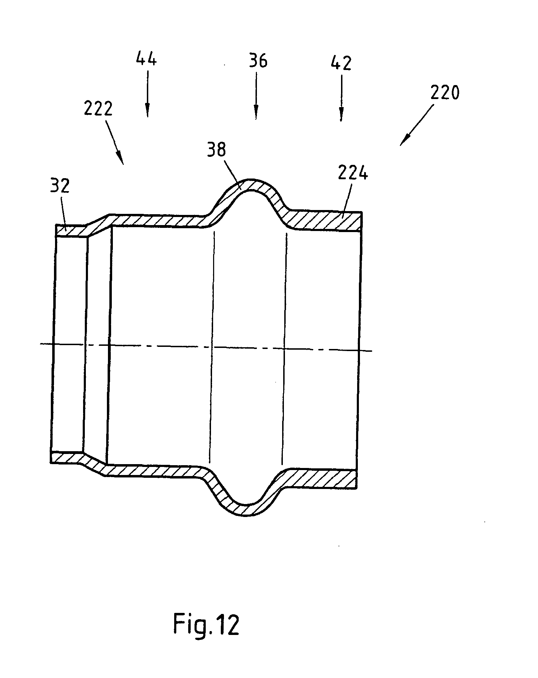

Fig. 12 zeigt ein neuntes Ausführungsbeispiel eines erfindungsgemäßen Pressfittings 220. Das rohrförmige Bauteil 32 weist wie beim ersten Ausführungsbeispiel nach Fig. 2 einen Endabschnitt 222 auf, der einen ersten Bereich 36 mit Wulst 38, einen zweiten Bereich 42 und einen dritten Bereich 44 aufweist. Im Gegensatz zum ersten Ausführungsbeispiel ist der zweite Bereich 42 über seine ganze Länge mit einer Gesamtwandstärke versehen, die gegenüber der Wandstärke des rohrförmigen Bauteils 32 im dritten Bereich 44 durch eine integrale Verdickung 224 erhöht ist. Es bildet sich daher keine Stufe entlang des zweiten Bereichs 42 aus.

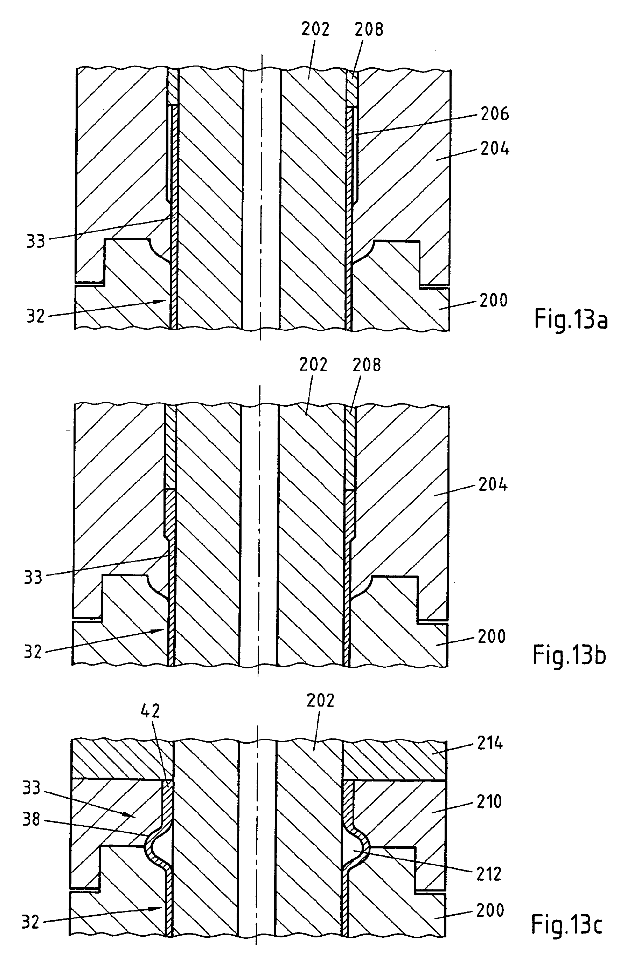

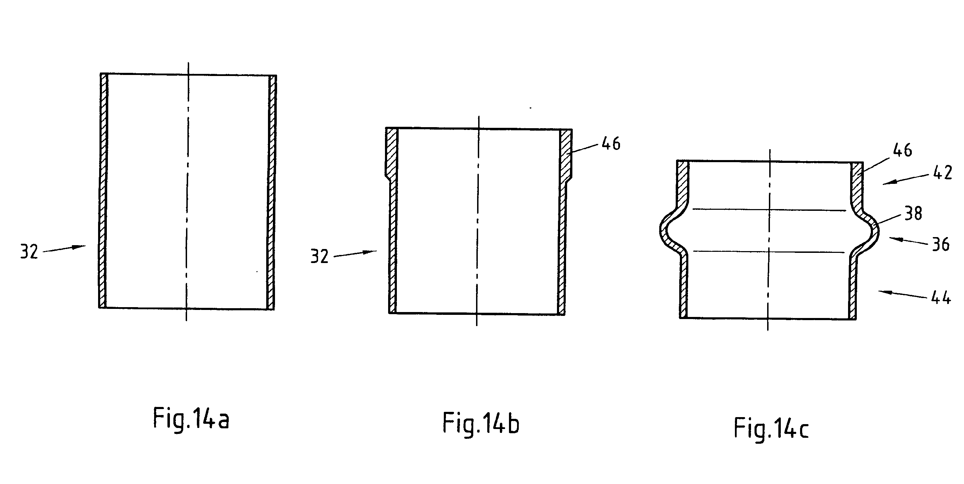

Die Fig. 13a bis c und 14 erläutern - ähnlich wie die Fig. 10 und 11 - das Verfahren zur Herstellung des Pressfittings nach Fig. 12. In Fig. 13 beizeichnen gleiche Bezugszeichen gleiche Elemente wie in Fig. 10. Die Funktionsweise ist im Übrigen gleich, wie im Zusammenhang mit Fig. 10 beschrieben worden ist. Der Unterschied zu Fig. 10 liegt darin, dass der Zwischenraum 206 länger ausgebildet ist und dass beim Stauchen des Endabschnitts 33 ein längerer Abschnitt, nämlich der gesamte zweiten Bereich 42 gestaucht wird und eine größere Wandstärke als das rohrförmige Bauteil 32 in seiner Ausgangsform aufweist.

Fig. 14 zeigt in gleicher Weise wie Fig. 11 die verschiedenen Formen, die das rohrförmige Bauteil 32 vor, während und nach dem Stauchen einnimmt. Auch hier ist der verlängerte Bereich der Verdickung 46 zu erkennen.

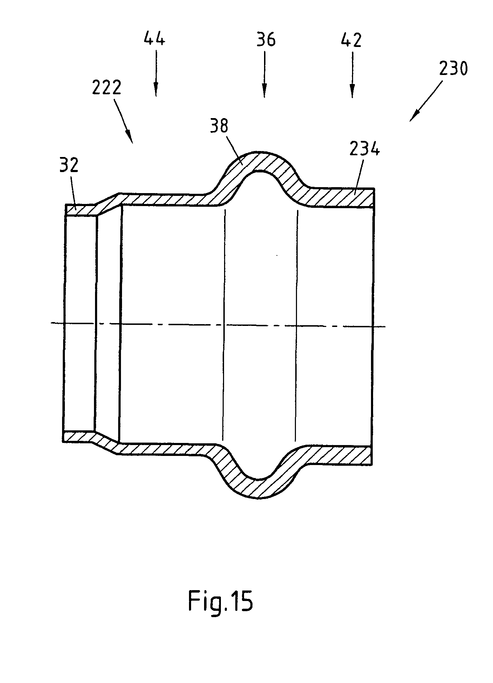

Fig. 15 zeigt ein zehntes Ausführungsbeispiel eines erfindungsgemäßen Pressfittings 230. Das rohrförmige Bauteil 32 weist wie beim ersten Ausführungsbeispiel nach Fig. 2 und beim neunten Ausführungsbeispiel nach Fig. 12 einen Endabschnitt 222 auf, der einen ersten Bereich 36 mit Wulst 38, einen zweiten Bereich 42 und einen dritten Bereich 44 aufweist. Im Gegensatz zum ersten und neunten Ausführungsbeispiel ist sowohl der zweite Bereich 42 als auch der erste Bereich 36 über seine ganze Länge mit einer Gesamtwandstärke versehen, die gegenüber der Wandstärke des rohrförmigen Bauteils 32 im dritten Bereich 44 durch eine integrale Verdickung 234 erhöht ist. Es bildet sich daher keine Stufe entlang des zweiten Bereichs 42 aus und auch die Wulst 38 weist eine größere Wandstärke auf.

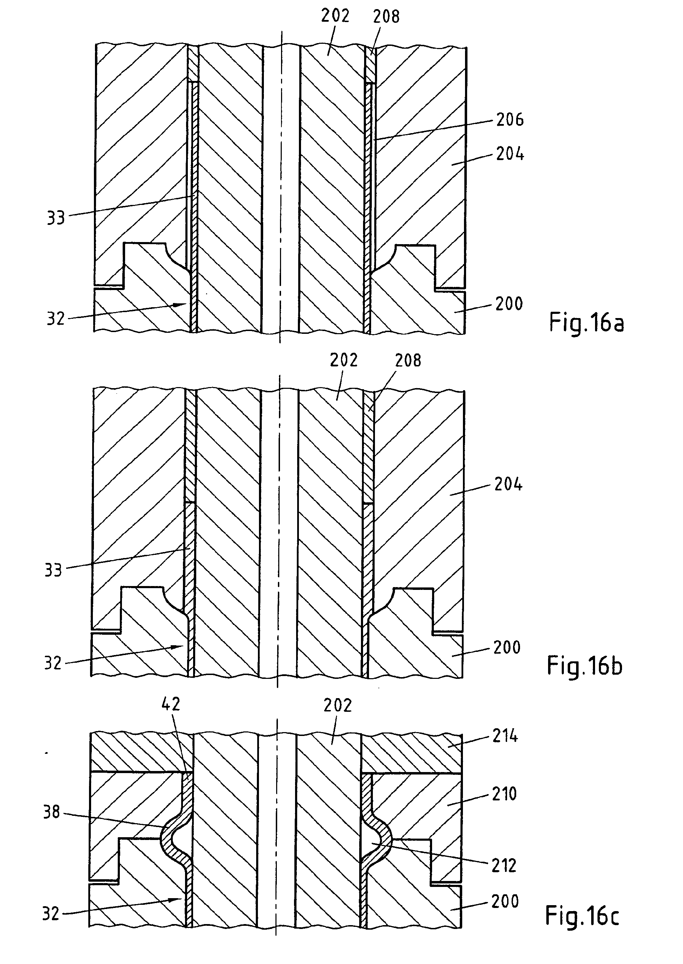

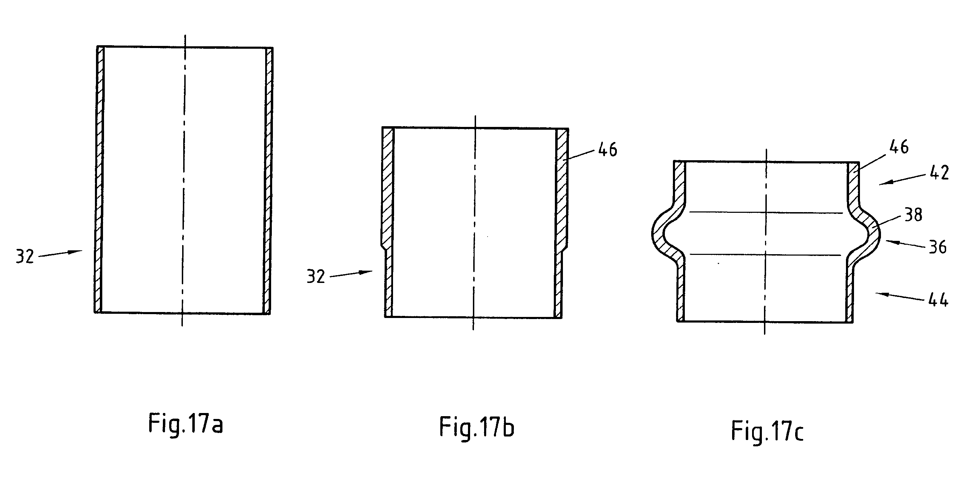

Die Fig. 16a bis c und 17 erläutern - ähnlich wie die Fig. 10 und 11 sowie die Fig. 13 und 14 - das Verfahren zur Herstellung des Pressfittings nach Fig. 15. In Fig. 16 beizeichnen gleiche Bezugszeichen gleiche Elemente wie in Fig. 10 und 13. Die Funktionsweise ist im Übrigen gleich, wie im Zusammenhang mit Fig. 10 beschrieben worden ist. Der Unterschied zu Fig. 10 und 13 liegt darin, dass der Zwischenraum 206 nochmals länger ausgebildet ist und dass beim Stauchen des Endabschnitts 33 ein nochmals längerer Abschnitt, nämlich der gesamte zweiten Bereich 42 und der erste Bereich 36 mit der daraus entstehenden Wulst 38 gestaucht wird und eine größere Wandstärke als das rohrförmige Bauteil 32 in seiner Ausgangsform aufweist.

Fig. 17 zeigt in gleicher Weise wie die Fig. 11 und 14 die verschiedenen Formen, die das rohrförmige Bauteil 32 vor, während und nach dem Stauchen einnimmt. Auch hier ist der verlängerte Bereich der Verdickung 46 und der Wulst 38 zu erkennen.

Bei den Ausführungsbeispielen für die Verfahren zur Herstellung der erfindungsgemäßen ersten, neunten und zehnten Ausführungsbeispiele kann das Aufweiten vor oder nach dem Stauchen und insbesondere vor oder nach dem Einbringen der Wulst durchgeführt werden. Die Reihenfolge der einzelnen Bearbeitungsschritte kann daher so gewählt werden, wie es in Abhängigkeit von Material und Dimensionen des Pressfittings am Günstigsten ist.

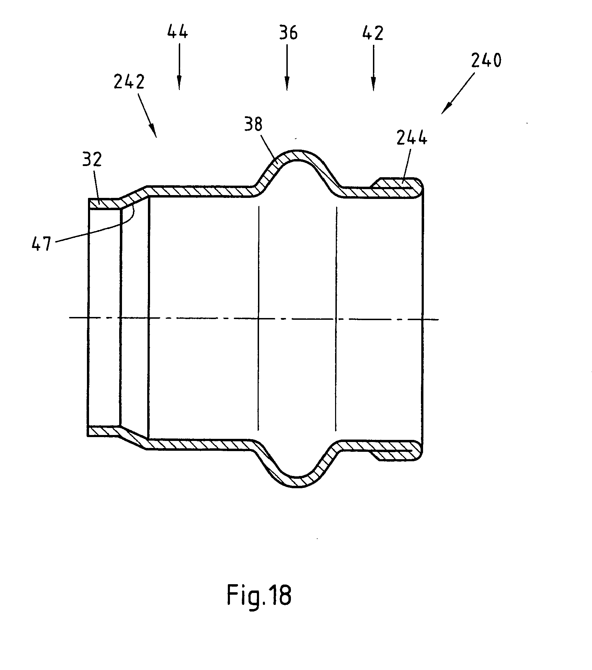

Fig. 18 zeigt ein elftes Ausführungsbeispiel eines erfindungsgemäßen Pressfittings 240. Das rohrförmige Bauteil 32 weist einen zweiten Bereich 242 auf, der einen ersten Bereich 36 mit Wulst 38, einen zweiten Bereich 42 und einen dritten Bereich 44 aufweist. Der zweite Bereich 42 ist zumindest teilweise nach außen gebördelt und ist somit im Bereich der Bördelung 244 integral zweilagig ausgebildet.

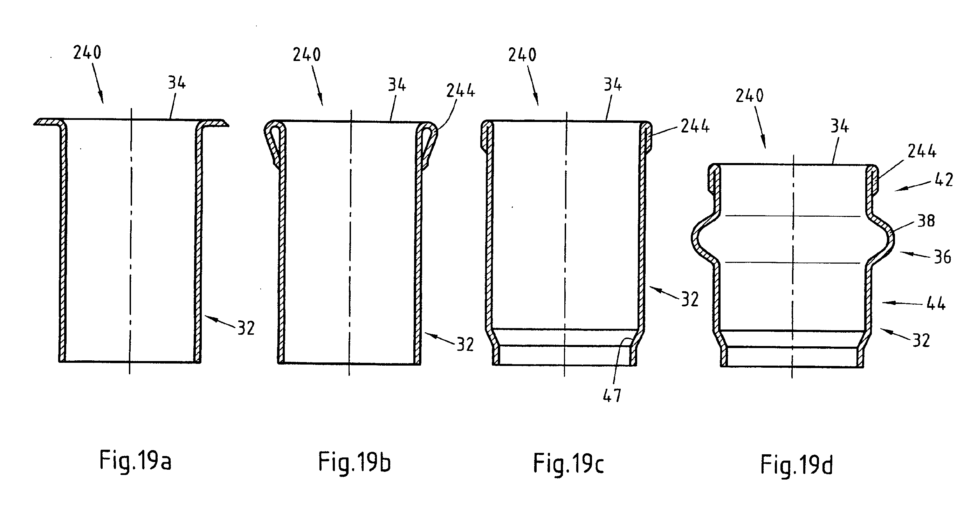

Fig. 19 zeigt die verschiedenen Formen des Pressfittings 240 während der Herstellung. Fig. 19a zeigt das rohrförmige Bauteil 32, dessen Rand im Bereich der Öffnung 34 um zunächst 90° nach außen gebördelt ist. Fig. 19b zeigt die vollständige Bördelung 244. Im nächsten Schritt, siehe Fig. 19c, wird das Bauteil 32 von der Seite der Öffnung 34 her aufgeweitet, wodurch sich einerseits die Bördelung 244 anlegt und eine zweilagige Form ergibt und wodurch andererseits der Anschlag 47 ausgebildet wird, der für eine Positionierung eines Rohres innerhalb des Pressfittings vorgesehen ist. Anschließend wird, wie Fig. 19d darstellt, die Wulst 38 eingeformt, so dass sich die drei Bereiche 36, 42 und 44 ergeben, wie sie bereits in Fig. 18 gezeigt sind.

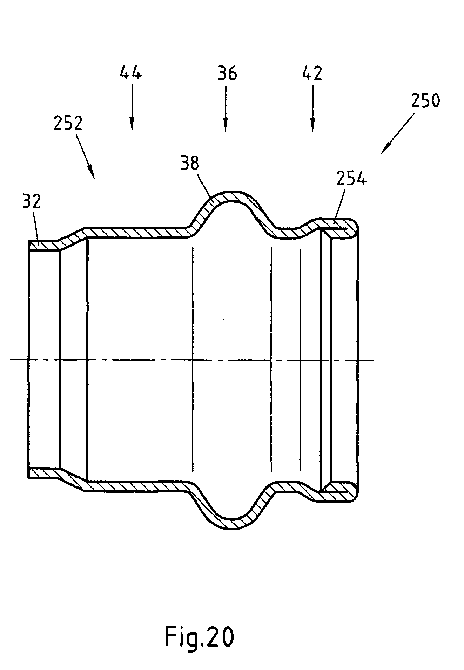

Fig. 20 zeigt ein zwölftes Ausführungsbeispiel eines erfindungsgemäßen Pressfittings 250. Das rohrförmige Bauteil 32 weist einen zweiten Bereich 252 auf, der einen ersten Bereich 36 mit Wulst 38, einen zweiten Bereich 42 und einen dritten Bereich 44 aufweist. Der zweite Bereich 42 ist zumindest teilweise nach innen gebördelt und ist somit im Bereich der Bördelung 254 integral zweilagig ausgebildet.

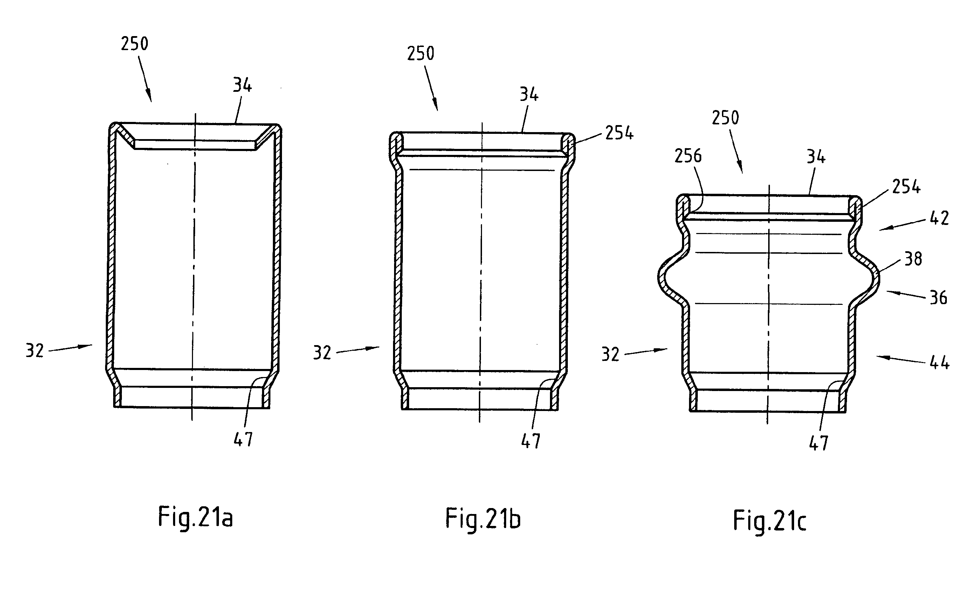

Fig. 21 zeigt die verschiedenen Formen des Pressfittings 250 während der Herstellung. Fig. 21a zeigt das rohrförmige Bauteil 32, das bereits aufgeweitet ist und einen Anschlag 47 für ein einzusteckendes Rohr aufweist. Der Rand des Bauteils 32 ist im Bereich der Öffnung 34 nach innen gebördelt. Fig. 21b zeigt die vollständige Bördelung 244, die durch eine zweite Aufweitung, die sich nur im zweiten Bereich 42 erstreckt, erzeugt worden ist. Im nächsten Schritt, siehe Fig. 21c, wird die Wulst 38 eingeformt, so dass sich die drei Bereiche 36, 42 und 44 ergeben, wie sie bereits in Fig. 20 gezeigt sind.

Die Bördelung 254 nach innen weist einen weiteren Vorteil auf. Die sich durch die nach innen gerichtete Bördelung 254 ergebende Kante 256 führt beim Verpressen mit einem eingeschobenen Rohr zu einer zusätzlichen Kante, die sich in das Material des Rohres eindrücken kann. Dadurch wird die Verriegelung des Rohres innerhalb des Pressfittings 250 verstärkt.

Die Merkmale der in den verschiedenen Ausführungsformen und Ausführungsbeispielen dargestellten Pressfittings können zur Anpassung des Pressfittings an die jeweiligen gestellten Anforderungen natürlich vorteilhafterweise miteinander kombiniert werden.

## Patentansprüche

1. Pressfitting
- mit einem rohrförmigen Bauteil (32) und
- mit einem Endabschnitt des rohrförmigen Bauteils (32), der zum Herstellen einer Verbindung verpressbar ist,
- wobei das rohrförmige Bauteil aus Kupfer oder einer Kupferlegierung, insbesondere Rotguss, oder aus Stahl besteht,
- wobei der Endabschnitt eine Öffnung (34) zur Aufnahme eines Rohres aufweist,
- wobei der Endabschnitt einen ersten Bereich (36) mit einem ringförmigen Wulst (38) zur Aufnahme eines Dichtungsrings (40) aufweist,
- wobei der Endabschnitt einen auf der der Öffnung (34) zugewandten Seite des Wulstes (38) angeordneten zweiten Bereich (42) und einen auf der der Öffnung (34) abgewandten Seite des Wulstes (38) angeordneten dritten Bereich (44) aufweist und
- wobei der erste, zweite und dritte Bereich den Einsteckbereich des Rohres definieren,
**dadurch gekennzeichnet,**
- **dass** die Gesamtwandstärke des rohrförmigen Bauteils (32) im zweiten Bereich (42) gegenüber der Gesamtwandstärke des rohrförmigen Bauteils (32) im dritten Bereich (44) zumindest abschnittsweise erhöht ist.

2. Pressfitting nach Anspruch 1,
**dadurch gekennzeichnet,**
**dass** die Gesamtwandstärke des rohrförmige Bauteils (32) im zweiten Bereich (42) gegenüber der Wandstärke des rohrförmigen Bauteils (32) im dritten Bereich (44) zumindest abschnittsweise um mindestens 50 %, bevorzugt mindestens 75 %, insbesondere mindestens 100 %, erhöht ist

3. Pressfitting nach Anspruch 1 oder 2,
**dadurch gekennzeichnet,**
**dass** die Gesamtwandstärke des rohrförmigen Bauteils (32) im ersten Bereich (36) und ggf. im zweiten Bereich (42) durch eine integrale lokale Verdickung (46) zumindest abschnittsweise erhöht ist.

4. Pressfitting nach einem der Ansprüche 1 bis 3,
**dadurch gekennzeichnet,**
**dass** der zweite Bereich (42) des rohrförmigen Bauteils (32) zumindest teilweise nach außen oder nach innen gebördelt ist und dass der zweite Bereich (42) im Bereich der Bördelung (244) zweilagig ausgebildet ist.

5. Pressfitting nach einem der Ansprüche 1 bis 4,
**dadurch gekennzeichnet,**
**dass** die Gesamtwandstärke im zweiten Bereich (42) durch ein separates, ringförmiges Element (52, 62, 76, 86, 102, 112) erhöht ist.

6. Pressfitting Anspruch 5,
**dadurch gekennzeichnet,**
**dass** das ringförmige Element (52, 62, 76, 86, 102, 112) durch eine kraft-, stoff- und/oder formschlüssige Verbindung zumindest in Axialrichtung an dem rohrförmigen Bauteil (32) fixiert ist.

7. Pressfitting nach Anspruch 5 oder 6,
**dadurch gekennzeichnet,**
**dass** das ringförmige Element (52, 62, 76, 86) außerhalb des rohrförmigen Bauteils (32) angeordnet ist.

8. Pressfitting nach einem der Ansprüche 5 bis 7,
**dadurch gekennzeichnet,**
**dass** das rohrförmige Bauteil (32) im zweiten Bereich (42) eine Aufweitung (101, 114) zur Aufnahme des ringförmigen Elementes (102, 112) aufweist und dass das ringförmige Element (102, 112) innerhalb des rohrförmigen Bauteils (32) angeordnet ist.

9. Pressfitting nach einem der Ansprüche 5 bis 8,
**dadurch gekennzeichnet,**
**dass** das ringförmige Element (52, 62, 76, 86, 102, 112) im Wesentlichen über den gesamten Umfang eine konstante Dicke aufweist.

10. Pressfitting nach einem der Ansprüche 1 bis 9,
**dadurch gekennzeichnet,**
**dass** im dritten Bereich (44) innerhalb des rohrförmigen Bauteils (32) ein Hülsenelement (88) aus einem elastischen Material, insbesondere einem elastischem Kunststoff, vorgesehen ist.

11. Pressfitting nach Anspruch 10,
**dadurch gekennzeichnet,**
**dass** das Hülsenelement (88) auf der der Öffnung (34) abgewandten Seite eine Verdickung (92), optional mit einer Anschlagsfläche (94) für ein einzuführendes Rohr, aufweist.

12. Pressfitting nach einem der Ansprüche 1 bis 11,
**dadurch gekennzeichnet,**
**dass** die Wandstärke des rohrförmigen Bauteils (32) im Bereich der Wulst (38) geringer ist als die Gesamtwandstärke des rohrförmigen Bauteils (32) im zweiten Bereich (42).

13. Pressfitting nach einem der Ansprüche 1 bis 12,
**dadurch gekennzeichnet,**
**dass** außerhalb des rohrförmigen Bauteils (32) eine den Wulst (38) überdeckende, ringförmige Wulstabdeckung vorgesehen ist.

14. Verwendung eines Pressfittings nach einem der Ansprüche 1 bis 14 für Trink- oder Brauchwasserinstallationen sowie für Gas- und Heizungsinstallationen.

## Claims

1. Press fitting
- having a tubular component (32) and
- having an end section of the tubular component (32) which can be compressed to produce a connection,
- wherein the tubular component consists of copper or of a copper alloy, in particular red brass, or of steel,
- wherein the end section has an opening (34) for receiving a pipe,
- wherein the end section has a first area (36) having an annular bulge (38) for receiving a sealing ring (40),
- wherein the end section has a second area (42) arranged on the side of the bulge (38) facing the opening (34) and a third area (44) arranged on the side of the bulge (38) facing away from the opening (34), and
- wherein the first, second and third areas define the insert area of the pipe, **characterised in that**
- the overall wall thickness of the tubular component (32) is at least in sections increased in the second area (42) compared to the overall wall thickness of the tubular component (32) in the third area (44).

2. Press fitting according to Claim 1, **characterised in that** the overall wall thickness of the tubular component (32) in the second area (42) is at least in sections increased by at least 50%, preferably by at least 75%, in particular by at least 100%, compared to the wall thickness of the tubular component (32) in the third area (44).

3. Press fitting according to Claim 1 or 2, **characterised in that** the overall wall thickness of the tubular component (32) in the first area (36), and possibly in the second area (42), is at least in sections increased by an integral local thickening (46).

4. Press fitting according to any one of Claims 1 to 3, **characterised in that** the second area (42) of the tubular component (32) is at least partly folded outwards or inwards, and **in that** the second area (42) is formed in two layers in the area of the folding (244).

5. Press fitting according to any one of Claims 1 to 4, **characterised in that** the overall wall thickness in the second area (42) is increased by a separate annular element (52, 62, 76, 86, 102, 112).

6. Press fitting according to Claim 5, **characterised in that** the annular element (52, 62, 76, 86, 102, 112) is at least in the axial direction fixed to the tubular component (32) by means of a force-fit, firmly bonded and/or form-fit connection.

7. Press fitting according to Claim 5 or 6, **characterised in that** the annular element (52, 62, 76, 86) is arranged outside the tubular component (32).

8. Press fitting according to any one of Claims 5 to 7, **characterised in that** the tubular component (32) has a widening (101, 114) in the second area (42) for receiving the annular element (102, 112), and **in that** the annular element (102, 112) is arranged inside the tubular component (32).

9. Press fitting according to any one of Claims 5 to 8, **characterised in that** the annular element (52, 62, 76, 86, 102, 112) has a constant thickness essentially over the entire circumference.

10. Press fitting according to any one of Claims 1 to 9, **characterised in that** a sleeve element (88) consisting of an elastic material, in particular consisting of an elastic plastic material, is provided in the third area (44) inside the tubular component (32).

11. Press fitting according to Claim 10, **characterised in that** the sleeve element (88) has a thickening (92) on the side facing away from the opening (34), optionally with a stop face (94) for a pipe to be inserted.

12. Press fitting according to any one of Claims 1 to 11, **characterised in that** the wall thickness of the tubular component (32) is narrower in the area of the bulge (38) than the overall wall thickness of the tubular component (32) in the second area (42).

13. Press fitting according to any one of Claims 1 to 12, **characterised in that** an annular bulge cover covering the bulge (38) is provided outside the tubular component (32).

14. Use of a press fitting according to any one of Claims 1 to 14 for drinking water or process water piping systems and for gas and heating installations.

## Revendications

1. Raccord pressé
- qui comprend un composant en forme de tube (32) et
- une section finale du composant en forme de tube (32), qui peut être pressée pour établir une liaison, sachant que le composant en forme de tube consiste en cuivre ou en alliage de cuivre, en particulier en fonte rouge, ou en acier,
- sachant que la section finale étant dotée d'une ouverture (34) qui est destinée à recevoir un tube,
- sachant que ladite section finale présente une première région (36) qui est dotée d'un bourrelet en forme d'anneau (38) qui est destiné à recevoir une bague d'étanchéités (40),
- sachant que la section finale présente une deuxième région {42), qui est disposée sur la face du bourrelet (38) orientée vers l'ouverture (34), et une troisième région (44), qui est disposée sur la face du bourrelet (38) orientée à l'opposé de l'ouverture (34) et
- sachant que la première région, la deuxième région et la troisième région définissent la région d'insertion du tube,
**caractérisé en ce que**
- l'épaisseur totale de paroi du composant en forme de tube (32), dans la deuxième région (42) est, au moins par sections, plus élevée que l'épaisseur totale de paroi du composant en forme de tube (32) dans la troisième région (44).

2. Raccord pressé selon la revendication 1, **caractérisé en ce que** l'épaisseur totale de paroi du composant en forme de tube (32) dans la deuxième région (42) est, au moins par sections, plus élevée d'au moins 50 %, de préférence d'au moins 75 %, en particulier d'au moins 100 % que l'épaisseur de paroi du composant en forme de tube (32) dans la troisième région (44).

3. Raccord pressé selon revendication 1 ou 2,
**caractérisé en ce que** l'épaisseur totale de paroi du composant en forme de tube (32) dans la première région (36) et, le cas échéant, dans la deuxième région (42) est surélevée, au moins par sections, par un épaississement local, intégral {46).

4. Raccord pressé selon l'une des revendications 1 à 3,
**caractérisé en ce que** la deuxième région (42) du composant en forme de tube (32) est, au moins partiellement, est sertie vers l'extérieur ou vers l'intérieur **et q u e** la deuxième région (42) st formée de deux couches dans la région du sertissage (244).

5. Raccord pressé selon l'une des revendications 1 à 4,
**caractérisé en ce que** l'épaisseur totale de paroi dans la deuxième région {42) est surélevée par un élément en forme d'anneau (52, 62, 76, 86, 102, 112) séparé.

6. Raccord pressé selon la revendication 5,
**caractérisé en ce que** l'élément annulaire (52, 62, 76, 86, 102, 112) est fixé au composant en forme de tube (32) par adhérence, par liaison de matière et / ou par emboîtement au moins dans la direction axiale.

7. Raccord pressé selon revendication 5 ou 6, **caractérisé en ce que** l'élément annulaire {52, 62, 76, 86) est disposé en dehors du composant en forme de tube (32).

8. Raccord pressé selon l'une des revendications 5 à 7,
**caractérisé en ce que** le composant en forme de tube {32) est doté, dans la deuxième région (42), d'un élargissement (101, 114) qui est destinée à recevoir l'élément en forme d'anneau (102, 112) et q u e ledit élément en forme d'anneau (102, 112) est disposé à l'intérieur du composant en forme de tube (32).

9. Raccord pressé selon l'une des revendications 5 à 8,
**caractérisé en ce que** l'élément en forme d'anneau (52, 62, 76, 86, 102, 112) présente une épaisseur sensiblement constance sur la totalité du pourtour.

10. Raccord pressé selon l'une des revendications 1 à 9,
**caractérisé en ce que,** dans la troisième région (44), à l'intérieur du composant en forme de tube (32), est prévu un élément en forme de douille (88) en matériau élastique, en particulier en matière synthétique élastique.

11. Raccord pressé selon la revendication 10,
**caractérisé en ce que** l'élément en forme de douille (88) est doté, sur la face opposée à l'ouverture (34), d'un épaississement (92), avec, en option, une surface de butée (94) pour un tube à introduire.

12. Raccord pressé selon l'une des revendications 1 à 11,
**caractérisé en ce que** l'épaisseur de paroi du composant en forme de tube (32) dans la région du bourrelet (38) est plus faible que l'épaisseur totale de paroi du composant en forme de tube (32) dans la deuxième région (42).

13. Raccord pressé selon l'une des revendications 1 à 12,
**caractérisé en ce que,** en dehors du composant en forme de tube (32), est prévu un recouvrement en forme d'anneau, qui recouvre le bourrelet (38).

14. Utilisation d'un raccord pressé selon l'une des revendications 1 à 14 pour des installations d'eau potable ou d'eau industrielle, ainsi que pour des installations de gaz ou de chauffage.
